# EUROPÄISCHE PATENTANMELDUNG

(11) **EP 0 872 935 A1**
(43) Veröffentlichungstag der Anmeldung: **21.10.1998**
(21) Anmeldenummer: 98102166.0
(22) Anmeldetag: 07.02.1998
(51) Int. Cl.: H02G 1/00, B23D 23/00, B23D 33/02, B21F 33/00

(54) **Schneidvorrichtung für geflochtene oder lamellierte Materialien**

(30) Priorität: 14.04.1997 DE 19715522
(71) Anmelder: NOVOPRESS GMBH PRESSEN UND PRESSWERKZEUGE & CO. KG., 41460 Neuss (DE)
(72) Erfinder:
(74) Vertreter: Paul, Dieter-Alfred, Dipl.-Ing.

(57) **Zusammenfassung**

Die Erfindung betrifft eine Vorrichtung zum Schneiden von geflochtenen oder lamellierten Materialien, mit einer eine Auflagefläche (3) für das zu schneidende Material (4) bildenden Leiste (1) und einem quer zur Auflagefläche (3) bewegbaren Messer (5), wobei die Leiste (1) wenigstens zwei Leistenelemente (1a, 1b) aufweist, die zwischen sich einen zur Auflagefläche (3) öffnenden Spalt (S) bilden, in den das Messer am Ende eines Schnittvorgangs eintritt, und ist dadurch gekennzeichnet, daß die Leistenelemente (1a, 1b) relativ zueinander unter Veränderung der Spaltweite bewegbar sind. Die Erfindung betrifft ferner ein Verfahren zum Schneiden von geflochtenen oder lamellierten Materialien, insbesondere von feingeflochtenen Drahtbändern und lamellierten Leitern.

## Beschreibung

Die vorliegende Erfindung betrifft eine Vorrichtung zum Schneiden von geflochtenen oder lamellierten Materialien, insbesondere von feingeflochtenen Drahtbändern und lamellierten Leitern, mit einer eine Auflagefläche für das zu schneidende Material bildenden Leiste und einem quer zur Auflagefläche bewegbaren Messer, wobei die Leiste wenigstens zwei Leistenelemente aufweist, die zwischen sich einen zur Auflagefläche öffnenden Spalt bilden, in den das Messer am Ende eines Schnittvorgangs eintritt.

Des weiteren betrifft die Erfindung ein Verfahren zum Schneiden von solchen Materialien.

In der Elektroindustrie werden als elektrische Leiter in zunehmendem Maß sogenannte feingeflochtene Drähte oder Flachbänder eingesetzt, die aus einer Vielzahl von geflochteten Feinleitern bzw. Litzen bestehen. Außerdem werden als Stromschienen sogenannte lamellierte Leiter verwendet, die aus einer Mehrzahl von im wesentlichen parallel zueinander liegenden Einzelleitern bzw. Lamellen bestehen. Das Schneiden von solchen geflochtenen bzw. lamellierten Leitern bringt unterschiedliche Anforderungen mit sich. So kommt es beim Schneiden von geflochtenen Drähten bzw. Flachbändern darauf an, daß alle Litzen sauber durchtrennt werden, so daß zwei vollständig voneinander getrennte Drahtstücke entstehen, die nicht noch durch einzelne Litzen zusammengehalten werden. Bei den lamellierten Leitern ist es wichtig, daß der Schnitt sauber und gratfrei ist, die einzelnen Teilstücke eben bleiben und keine Verbiegung an der Schnittkante aufweisen und sich die einzelnen Lamellen während des Schnitts nicht relativ zueinander verschieben, was zu unterschiedlichen Längen der Lamellen führen würde.

Bei einer bekannten Schneidvorrichtung der eingangs genannten Art wird das zu schneidende feingeflochtene oder lamellierte Material auf einer Auflagefläche, die von zwei beabstandet nebeneinanderliegenden Leistenelementen gebildet ist, positioniert und mit einem quer zur Auflagefläche bewegbaren Messer zerteilt, das am Ende des Schnittvorgangs in den zwischen den Leistenelementen gebildeten Spalt eintritt. Dadurch, daß bei dieser Schneidvorrichtung das Messer die Auflagefläche durchtreten kann, wird zwar sichergestellt, daß die einzelnen Lamellen bzw. Litzen sicher durchtrennt werden, jedoch werden die Lamellen bzw. Litzen durch den Anschnittwinkel des Messers um die Kanten der Leistenelemente verbogen. Insbesondere wird die unterste Lamelle ganz verbogen bzw. zerrissen, da der Anschnittwinkel die Teilstücke auseinanderdrückt. Durch die Verbiegung entsteht eine scharfe Kante an der untersten Lamelle, die zu Verletzungen führen kann. Diese Nachteile sind dadurch zu erklären, daß der Spalt zwischen den Leistenelementen keine Schutzwirkung für die Lamellen bietet.

Bei einer anderen Schneidvorrichtung wird daher die Auflagefläche durch eine durchgehende Leiste gebildet. Dies hat beim Schneiden von lamellierten Leitern jedoch den Nachteil, daß die einzelnen Lamellen aufgrund des Anschnittwinkels des Messers unterschiedliche Längen besitzen. Außerdem erfordert der Schnittvorgang eine sehr aufwendige Regelung, da einerseits das Messer möglichst an der Leiste anliegen muß, um auch die auflagenflächenseitigen feinen Litzen oder Lamellen zu durchtrennen, und andererseits das Messer die Leiste nicht berühren darf, da ansonsten Bruchgefahr besteht. Außerdem ist bei Verschleiß an der Messerschneide ein sauberes Durchtrennen der Leiter nicht mehr gewährleistet, so daß das Messer häufig nachgeschliffen werden muß, um sicherzustellen, daß die Messerschneide ausreichend scharf ist und parallel zur Auflagefläche liegt.

Aufgabe der Erfindung ist es daher, eine Vorrichtung und ein Verfahren zum Schneiden von bandförmigen Materialien anzugeben, mit denen feingeflochtene Drähte bzw. Flachbänder und lamellierte Leiter sauber und sicher geschnitten werden können.

Diese Aufgabe ist erfindungsgemäß bei einer Schneidvorrichtung der eingangs genannten Art dadurch gelöst, daß die Leistenelemente relativ zueinander unter Veränderung der Spaltweite bewegbar sind. Durch diese Ausbildung können während des Schnittvorgangs die Leistenelemente zunächst unter Bildung einer im wesentlichen durchgehenden Auflagefläche aneinander anliegen, so daß sie das Material gut unterstützen und somit insbesondere beim Schneiden von lamellieren Leitern die einzelnen Lamellen nicht verbogen werden können. Erst wenn das Messer in den kritischen Bereich an der Auflagefläche kommt, werden die Leistenelemente auseinanderbewegt, so daß das Messer durch die Auflagefläche hindurch in den Spalt eintreten kann, wodurch ein sicheres Zerschneiden auch der im Bereich der Auflagefläche liegenden Lamellen oder Litzen gewährleistet wird. Somit werden durch die erfindungsgemaße Ausbildung die Vorteile einer Schneidvorrichtung mit einem Eintrittsspalt für das Messer in der Auflagefläche einerseits und einer Schneidvorrichtung mit einer durchgehenden Auflagefläche andererseits auf einfache Weise kombiniert.

Zweckmäßigerweise sind die Leistenelemente parallel zur Auflagefläche gegeneinander verstellbar. Wenn nur ein kleiner Spalt zwischen den Leistenelementen für dass Messer erforderlich ist, können die Leistenelemente aber auch beispielsweise gegeneinander verkippt werden.

In Ausbildung der Erfindung ist vorgesehen, daß die Leistenelemente und das Messer derart miteinander gekoppelt sind, daß sich die Leistenelemente automatisch unter Vergrößerung des Spalts auseinanderbewegen, wenn das Messer in den Spalt eintritt. Hierzu kann beispielsweise ein Motor für die Relativbewegung der Leistenelemente vorgesehen sein, der über einen Steuer- bzw. Regelkreis entsprechend der Messerstellung betätigt wird. In Ausbildung der Erfindung sind jedoch in einfacher Weise die Leistenelemente und das Messer mechanisch miteinander gekoppelt. Hierzu werden die Leistenelemente zweckmässigerweise durch elastische Mittel in Anlage aneinander gehalten, wobei die Vorspannkraft der elastischen Mittel so eingestellt ist, daß die Leistenelemente beim Eintreten des Messers in den Spalt entgegen der Vorspannkraft auseinandergedrückt werden. Als elastische Mittel können beispielsweise Federelemente, insbesondere Schraubendruckfedern verwendet werden.

Grundsätzlich ist es denkbar, daß beide Leistenelemente bewegbar sind, wobei sie dann jeweils gegenläufige Bewegungen ausführen. In Ausbildung der Erfindung ist jedoch vorgesehen, daß ein Leistenelement feststehend und das andere Leistenelement bewegbar ist. In diesem Fall ist zur mechanischen Koppelung der Bewegungen von Messer und bewegbarem Leistenelement zweckmäßigerweise der Eckkantenbereich des bewegbaren Leistenelements zwischen Auflagefläche und Spalt abgeschrägt, wobei die Schrägfläche mit dem Messer beim Eintritt in den Spalt zusammenwirkt, um das bewegbare Leistenelement von den feststehenden Leistenelement wegzudrücken. Durch diese Ausbildung wird in einfacher und zuverlässiger Weise sichergestellt, daß sich das bewegbare Leistenelement unter Vergrößerung des Spalts vom feststehenden Leistenelement wegbewegt, wenn das Messer in die durch die Schrägfläche und die Stirnfläche des feststehenden Leistenelements gebildete Kerbe eindringt.

Bei nur einem bewegbaren Leistenelement wird vorzugsweise ein asymmetrisches Messer verwendet, wobei die dem feststehenden Leistenelement zugewandte Seite der Messerklinge und die spaltseitige Stirnfläche des feststehenden Leistenelements senkrecht zur Auflagefläche und in der Bewegungsebene der Messerschneide liegen, so daß die Messerklinge im Spalt am feststehenden Leistenelement geführt ist.

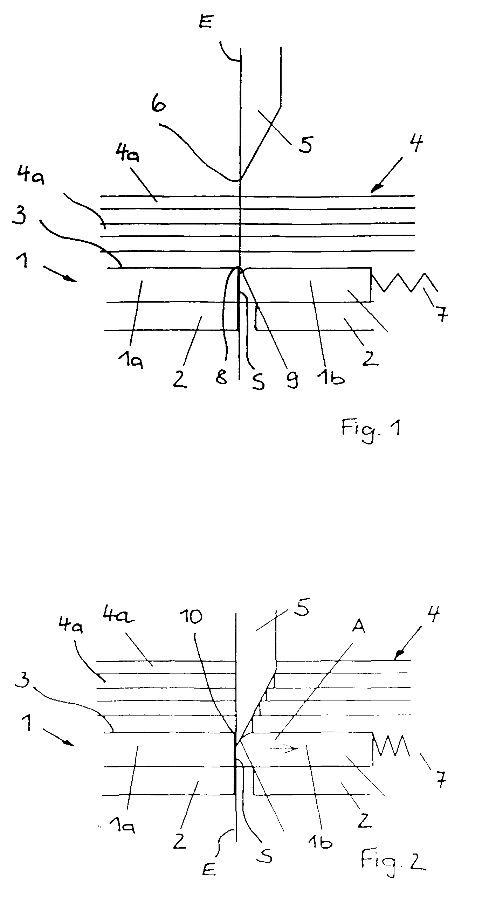

Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figar 1: eine Vorrichtung zum Schneiden von bandförmigen Materialien gemäß der vorliegenden Erfindung in schematischer Ansicht vor dem Schneidvorgang und
- Figru 2: die Vorrichtung aus Figur 1 während des Schneidvorgangs.

In den Figuren 1 und 2 ist eine Vorrichtung zum Schneiden von geflochtenen oder lamellierten Materialien gemäß der vorliegenden Erfindung dargestellt, die insbesondere zum Schneiden von feingeflochtenen Drähten bzw. Flachbändern und lamellierten Leitern bestimmt ist. Die Vorrichtung umfaßt im wesentlichen eine Leiste 1, die auf einem Gestell 2 vorgesehen ist und eine Auflagefläche 3 für den zu schneidenden Leiter 4 bildet und ein Messer 5, das quer zur Auflagefläche 3 geradlinig bewegbar ist. Die Leiste 1 wird von zwei nebeneinanderliegend angeordneten Leistenelementen 1a, 1b gebildet, deren Trennspalt S in der Schnittebene E der Messerschneide 6 liegt. Das eine Leistenelement 1a ist ortsfest an dem Gestell 2 fixiert und bildet eine scharfe Schneidkante 10̸, und das andere Leistenelement 1b ist am Gestell 2 parallel zur Auflagefläche 3 und quer zur Schnittebene E bewegbar angeordnet und wird durch ein Federelement 7, das sich am Gestell 2 abstützt, in Anlage an dem feststehenden Leistenelement 1a gehalten.

Die zum feststehenden Leistenelement 1a weisende Stirnseite des bewegbaren Leistenelements 1b ist in ihrem Eckenbereich zur Auflagefläche 3 hin abgeschrägt, so daß in der Auflagefläche 3 eine Kerbe 8 gebildet wird, in welche das Messer 3 während eines Schneidvorgangs eintritt.

Zum Schneiden des auf der Auflagefläche 3 positionierten lamellierten Leiters 4 wird das Messer 5 aus der in Figur 1 dargestellten Stellung in Richtung der Leiste 1 verfahren. Aufgrund der fast vollständigen Unterstützung des Leiters 4 durch die Leiste 1 zu Beginn des Schnitts werden die oberen Lamellenlagen 4a sauber zerschnitten, ohne daß eine Verbiegung der darunterliegenden Lamellenlagen 4a stattfindet. Da die Abstützung bis zur letzten Lamellenlage 4a erhalten bleibt, wird sichergestellt, daß die Lamellen ihre ursprüngliche Form beibehalten.

Nach dem Zerschneiden der letzten Lamellenlage 4a fährt das Messer 5 in die Kerbe 8 zwischen den beiden Leistenelementen 1a, 1b wobei das Messer 5 mit der Schrägfläche 9 der Kerbe 8 zusammenwirkt, um das bewegbare Leistenelement 1b in Richtung des Pfeils A von dem feststehenden Leistenelement 1a entgegen der Vorspannkraft des Federelements 7 wegzudrücken. Dabei vergrößert sich der Spalt S zwischen den Leistenelementen 1a, 1b, so daß das Messer 5 unter die Schneidkante 10̸ des feststehenden Leistenelements 1b tauchen kann, so daß eine sichere Durchtrennung auch der unteren Lamellenlagen 4a gewährleistet wird.

Dabei ist die Anordnung so getroffen, daß das Messer 5 die Auflagefläche 3 soweit durchgreift, daß die durch den Anschnittwinkel des Messers zueinander versetzten Lamellenlagen 4a (vgl. Fig. 2) durch den Schaftbereich konstanten Durchmesser des Messers 5 parallel zueinander ausgerichtet werden, so daß die Lamellen alle gleiche Länge besitzen.

Nach der Durchtrennung des Leiters 4 wird das Messer 3 wieder in seine in Figur 1 dargestellt Ausgangslage zurückbewegt, wobei es den Spalt S freigibt, so daß das bewegbare Leistenelement 1b durch die Rückstellkraft des Federelements 7 wieder in Anlage an dem feststehenden Leistenelement 1a gebracht wird.

Das Ausmaß der Verbiegung des Leiters 4 im Bereich der Kerbe 8 ist abhängig von der Breite der Schrägfläche 9. Bei sehr feinen Lamellen oder Litzen ist es vorteilhaft, die Breite der Schrägfläche 9 kleinzuhalten. Als Folge davon ist es erforderlich, den Schnittwinkel des Messers 3 kleinzuhalten, um ein sicheres Eingreifen der Messerschneide 6 in die Kerbe 8 zu gewährleisten. Es genügt eine kleine schmale Breite der Schrägfläche 9 in der Größenordnung von 0̸,1 bis 0̸,3 mm, damit das Messer 3 die Schrägfläche 9 trifft.

Da das Messer 3 immer bis unter die Leiste 1 verfahren wird, sind die Anforderungen an die Parallelität von Messerschneide 6 feststehendem Leistenelement 1a gering. Außerdem ist die Abnutzung der Messerschneide 6 bedeutend unkritischer.

## Patentansprüche

1. Vorrichtung zum Schneiden von geflochtenen oder lamellierten Materialien, insbesondere von feingeflochtenen Drahtbändern und lamellierten Leitern, mit einer eine Auflagefläche (3) für das zu schneidende Material (4) bildenden Leiste (1) und einem quer zur Auflagefläche (3) bewegbaren Messer (5), wobei die Leiste (1) wenigstens zwei Leistenelemente (1a, 1b) aufweist, die zwischen sich einen zur Auflagefläche (3) öffnenden Spalt (S) bilden, in den das Messer am Ende eines Schnittvorgangs eintritt,
dadurch gekennzeichnet, daß die Leistenelemente (1a, 1b) relativ zueinander unter Veränderung der Spaltweite bewegbar sind.

2. Vorrichtung nach Anspruch 1,
dadurch gekennzeichnet, daß die Leistenelemente (1a, 1b) parallel zur Auflageebene (3) gegeneinander verstellbar sind.

3. Vorrichtung nach Anspruch 1 oder 2,
dadurch gekennzeichnet,
daß die Leistenelemente (1a, 1b) und das Messer (5) derart miteinander gekoppelt sind, daß sich die Leistenelemente (1a, 1b) automatisch unter Vergrößerung des Spalts (S) auseinander bewegen, wenn das Messer (5) in den Spalt (S) eintritt.

4. Vorrichtung nach Anspruch 3,
dadurch gekennzeichnet, daß die Leistenelemente (1a, 1b) und das Messer (5) mechanisch miteinander gekoppelt sind.

5. Vorrichtung nach Anspruch 4,
dadurch gekennzeichnet,
daß die Leistenelemente (1a, 1b) durch elastische Mittel (7) in Anlage gehalten werden, wobei die Vorspannkraft der elastischen Mittel (7) so eingestellt ist, daß die Leistenelemente beim Eintreten des Messers (5) in den Spalt (S) entgegen der Vorspannkraft auseinander gedrückt werden.

6. Vorrichtung nach Anspruch 5,
dadurch gekennzeichnet, daß die elastischen Mittel (7) wenigstens ein Federelement, insbesondere eine Schraubendruckfeder, umfassen.

7. Vorrichtung nach einem der Ansprüche 1 bis 6,
dadurch gekennzeichnet, daß beide Leistenelemente (1a, 1b) insbesondere gegenläufig bewegbar sind.

8. Vorrichtung nach einem der Ansprüche 1 bis 6,
dadurch gekennzeichnet, daß ein Leistenelement (1a) feststehend und das andere Leistenelement (1b) bewegbar ist.

9. Vorrichtung nach Anspruch 8,
dadurch gekennzeichnet, daß der Eckkantenbereich des bewegbaren Leistenelements (1b) zwischen Auflagefläche (3) und Spalt abgeschrägt ist und die Schrägfläche (9) mit dem Messer (5) bei dessen Eintritt in den Spalt (S) zusammenwirkt, um das bewegbare Leistenelement (1b) von dem feststehenden Leistenelement (1a) wegzudrücken.

10. Vorrichtung nach Anspruch 9,
dadurch gekennzeichnet, daß die Messerklinge im Bereich der Messerschneide (6) eine der Schrägfläche (9) zugeordnete Auflaufschräge bildet.

11. Vorrichtung nach Anspruch 10̸,
dadurch gekennzeichnet, daß die Schrägfläche (9) des bewegbaren Leistenelements (1b) und die Auflaufschräge des Messers (3) beim Eintreten des Messers (5) in den Spalt zumindest bereichsweise flächig in Anlage kommen.

12. Vorrichtung nach einem der Ansprüche 9 bis 11,
dadurch gekennzeichnet, daß die dem feststehenden Leistenelement (1a) zugewandte Seite der Messerklinge und die spaltseitige Stirnseite des feststehenden Leistenelements (1a) senkrecht zur Auflagefläche und in der Bewegungsebene (E) der Messerschneide (6) liegen, so daß die Messerklinge im Spalt (S) am feststehenden Leistenelement (1a) geführt ist.

13. Vorrichtung nach einem der Ansprüche 1 bis 12,
dadurch gekennzeichnet, daß das Messer (5) senkrecht zur Auflagefläche (3) geradlinig bewegbar ist.

14. Vorrichtung nach einem der Ansprüche 1 bis 12,
dadurch gekennzeichnet, daß das Messer (5) in einer zur Auflagefläche (3) senkrechten Bewegungsebene verschwenkbar ist.

15. Verfahren zum Schneiden von geflochtenen oder lamellierten Materialien, insbesondere von feingeflochtenen Drahtbändern und lamellierten Leitern, bei dem das zu schneidende Material (4) auf einer von wenigstens zwei Leistenelementen (1a, 1b) gebildeten Auflagefläche (3) positioniert und mit einem quer zur Auflagefläche (3) bewegbaren Messer (5) zerteilt wird, wobei das Messer (5) in einen zwischen den Leistenelementen (1a, 1b) gebildeten und zur Auflagefläche (3) öffnenden Spalt (S) eintritt,
dadurch gekennzeichnet, daß die Leistenelemente (1a, 1b) während des Schnittvorgangs unter Bildung einer im wesentlichen durchgehenden Auflagefläche aneinander gehalten werden und sich beim Eintreten des Messers (5) in den Spalt (S) unter Vergrößerung des Spalts (S) auseinanderbewegen.

16. Verfahren nach Anspruch 15,
dadurch gekennzeichnet, daß das Messer (5) mit wenigstens einem Leistenelement (1b) beim Eintreten in den Spalt (S) zusammenwirkt, um die Leistenelemente (1a, 1b)auseinanderzudrücken.

17. Verfahren nach Anspruch 16,
dadurch gekennzeichnet, daß die Leistenelemente (1a, 1b) entgegen der Vorspannkraft eines elastischen Mittels (7) auseinander bewegt werden, so daß die Leistenelemente (1a, 1b) durch die Rückstellkraft des elastischen Mittels (7)automatisch wieder in in Anlage gebracht werden, wenn das Messer (5) aus dem Spalt (S) entfernt wird.
